# EUROPEAN PATENT SPECIFICATION

(11) **EP 3 414 026 B1**
(45) Date of publication and mention of the grant of the patent: **27.05.2020**
(21) Application number: 17711002.0
(22) Date of filing: 24.01.2017
(51) Int. Cl.: B23D 47/04, B09B 3/00, B09B 5/00, B23D 45/04, B26D 3/00, B65D 77/06

(54) **METHOD FOR RECOVERING INDUSTRIAL TANKS AND APPARATUS THEREFOR**
VERFAHREN ZUR RÜCKGEWINNUNG VON INDUSTRIETANKS UND VORRICHTUNG DAFÜR
METHODE DE RECYCLAGE DE RESERVOIRS INDUSTRIELS ET APPAREIL POUR METTRE EN OEUVRE LA METHODE.

(30) Priority: 09.02.2016 IT UB20160559
(43) Date of publication of application: 19.12.2018
(73) Proprietor: Scutaro Vincenzo & Figlio S.r.l., 56029 Santa Croce sull'Arno (PI) (IT)
(72) Inventor: SCUTARO, Donato, 56028 San Miniato (IT)
(74) Representative: Celestino, Marco
(86) International application number: PCT/IB2017/050358
(87) International publication number: WO 2017/137860

(56) References cited:
- EP-A1- 2 149 508
- DE-C1- 4 004 670
- US-A- 6 114 401
- US-A1- 2008 282 856

## Description

### Field of the invention

The present invention relates to a method for recovering industrial tanks.

In particular, the invention relates to a method for grinding plastic composite IBCs arranged to contain liquid of various type.

Furthermore, the present invention relates to a cutting machine for carrying out a step of this method.

### Description of the prior art

As well known, the industrial tanks for containing liquid normally comprise:
- a pallet in wood, plastic or aluminum which acts as support and attachment for handling the tank;
- an intermediate bulk container (IBC) of high density polyethylene that contains the liquid;
- an aluminum cage that protects the plastic composite IBC from possible damages.

Liquids contained in the tank are often of industrial type and have consistency very viscous, causing to be very difficult the cleaning of plastic composite IBC. For this reason, tanks are reconditioned, by removing the pallet and the cage, which are reused, and grinding and cleaning the IBC, in order to recycle the plastic.

Normally, the process of grinding the IBC is carried out by a crusher mill that reduces the IBC in recyclable plastic splinters. However, often in the IBCs remain residuals of industrial liquids which greatly degrade the quality of the produced plastic splinters.

For this reason, upstream of the grinding step, a step can be provided of cutting the IBC in 6 planar portions, corresponding to 6 sides of the IBC itself. This way, in addition to allow a more accurate cleaning and a better removal of the liquid contained, it is reduced also the volume of the IBC, assisting its storage and the manual handling before the grinding.

Generally the cutting step is carried out manually by a human operator. However, given the extreme care and precision required, the operator must be very experienced, increasing the overall process cost. Furthermore, as the operation is carried out in safety, they happen sometimes accidents due to carelessness or to human error. Furthermore, to keep the due security schemes, the cutting speed is lower than that of the final crushing by the mill, reducing the whole process efficiency.

In US6114401 is described a process for recovering plastic IBCs obtainable in an automatic way. In particular, the process provides a cutting phase of the IBC by a cutting machine comprising an electric saw, obtaining parts of plastics, and a washing step of such parts.

However, the process described by this document is not adapted to the industrial tanks above said, since it does not provide steps for removing the pallet wood and the metal cage.

Furthermore, the cutting step made by the electric saw does not provide a cutting pattern that allows to optimize the final volume of the derived parts of plastic, or to assist the next cleaning step. US 2008/282856 A1 discloses a cutting machine comprising a cutting unit and a gripper to move the tank to be cut with respect to the cutting unit.

### Summary of the invention

It is therefore a feature of the present invention to provide a process for recovering industrial tanks that provides plastic material of high hygienic quality.

It is also a feature of the present invention to provide such a process that is much quicker and more efficient with respect to processes that use a manual cutting of IBCs.

It is still a feature of the present invention to provide such a process that ensures total safety of use by human users.

These and other objects are achieved by a process for recovering industrial tanks comprising the steps of:
- prearranging a tank to recover, said tank comprising:
   - a plastic composite IBC arranged, in use, to contain liquid, said IBC having parallelepiped shape and comprising a bottom face, a top face and four side walls;

   - a pallet arranged to support the plastic composite IBC;
   - a cage arranged to wrap the plastic composite IBC;
- removing the cage and the pallet;
- cutting the plastic composite IBC obtaining planar portions;
- cleaning the planar portions from possible residuals of the liquid;
- grinding the planar portions obtaining a plurality of residual scales of plastic composite;
said cutting phase of the plastic composite IBC being carried out by a cutting machine, said cutting machine comprising at least one electric saw arranged to cut the plastic composite IBC,
whose characteristic is that the cutting step comprises the steps of:
- arranging the plastic composite IBC in the cutting machine;
- horizontal cutting along a curve γ₁ joining the bottom face with the side walls;
- vertical cutting along curves λ joining the side walls;
- horizontal cutting along a curve γ₂ joining the top face with the side walls.

In this way, there are significant improvements in terms of security for operators compared to the manual carrying out of the cutting step, since you avoid possible accidents due to the hurry or to the difficult maneuverability of the IBC owing to its volume.

Furthermore, there are significant advantages in terms of process efficiency, since it increases both the speed of the cutting phase, both the quality of the finished product.

Advantageously, the cutting step also comprises the steps of:
- locking the plastic composite IBC by a gripper;
- rotating the plastic composite IBC by the gripper, said rotation arranged to assist the steps of horizontal cutting along the curves γ₁ and γ₂.

According to another aspect of the invention, it is claimed a cutting machine for cutting a plastic composite IBC, said plastic composite IBC having parallelepiped shape and comprising a bottom face, a top face and four side walls, said cutting machine comprising:
- an insulating cabin comprising at least one access door;
- at least one electric saw internal to the insulating cabin and arranged to cut the plastic composite IBC;

- a gripper arranged to fasten and move the plastic composite IBC in the insulating cabin in order to assist the cutting of the plastic composite IBC;
whose main feature is that the cutting machine comprises:
- at least one horizontal electric saw arranged to cut the plastic composite IBC along horizontal curves γ₁, γ₂;
- at least one vertical electric saw arranged to cut the plastic composite IBC along vertical curves λ.

Advantageously, the gripper is adapted to rotate the plastic composite IBC to allow said or each horizontal electric saw to cut the plastic composite IBC along horizontal curves γ₁, γ₂.

In particular, the insulating cabin comprises:
- an area of inlet having a first access door, said area of inlet comprising a first horizontal electric saw arranged to cut the plastic composite IBC along a horizontal curve γ₁ joining the bottom face with the side walls;
- an area of outlet having a second access door, said area of outlet comprising:
   - four vertical electric saws arranged to cut the plastic composite IBC along four vertical curves λ;
   - a second horizontal electric saw arranged to cut the plastic composite IBC along a horizontal curve γ₂ joining the top face with the side walls.

In particular, the gripper is adapted to move the plastic composite IBC between the area of inlet and the area of outlet.

This way, it is possible to cut the bottom face of the IBC in the area of inlet, move the IBC in the area of outlet and cutting the side walls and the top face making them fall far from the bottom face. Thus, the walls and the top face of the IBC, normally much more clean of the bottom face (which instead contains most of the liquid residuals), doesn't enter in contact with the bottom face itself and can be sent directly to the grinding. The cleaning step relates, this way, only the bottom face, ensuring a considerable saving of water and pollutant detergents, in addition to speed up very much the cleaning process.

Advantageously, out of the insulating cabin a control board is located for the control of the cutting machine by a user.

This way, when the IBC is located in the cutting machine, the access doors are closed and the operator can maneuver the cutting machine externally, in total safety.

### Brief description of the drawings

Further characteristic and/or advantages of the present invention are brighter with the following description of an exemplary embodiment thereof, exemplifying but not limitative, with reference to the attached drawings in which:
- Fig. 1 shows the process for recovering industrial tanks according to the present invention;
- Fig. 2 shows a perspective view of an industrial tank to recover;
- Fig. 3A diagrammatically shows, in an elevational side view, the cutting machine during the horizontal cutting step along the curve γ₁;
- Fig. 3B diagrammatically shows, in top plan view, the cutting machine during the horizontal cutting step along the curve γ₁;
- Fig. 4A diagrammatically shows, in side view, the cutting machine during the vertical cutting step along curves λ;
- Fig. 4B diagrammatically shows, in top plan view, the cutting machine during the horizontal cutting step along curves λ;
- Fig. 5A diagrammatically shows, in side view, the cutting machine during the horizontal cutting step along the curve γ₂;
- Fig. 5B diagrammatically shows, in top plan view, the cutting machine during the horizontal cutting step along the curve γ₂;
- Fig. 6A diagrammatically shows, in side view, the cutting machine at the end of the cutting step;
- Fig. 6B diagrammatically shows, in top plan view, the cutting machine at the end of cutting step.

### Description of a preferred exemplary embodiment

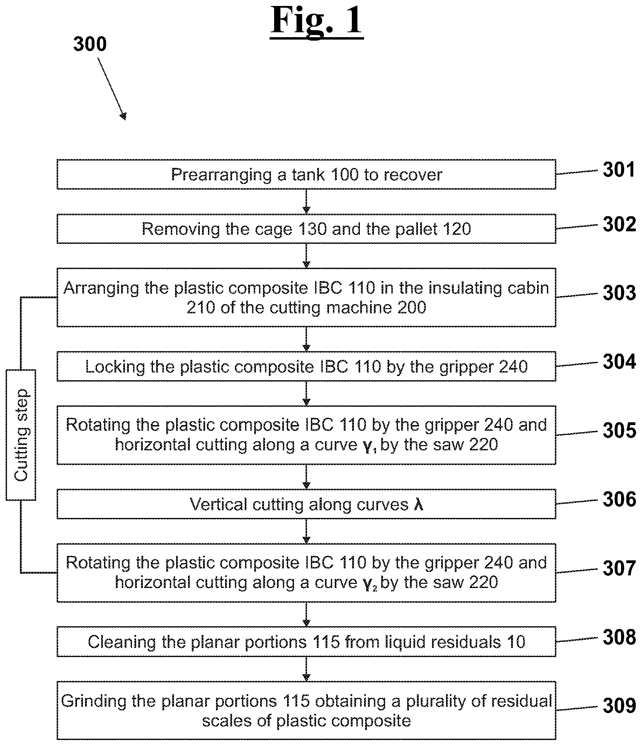

In Fig. 1 a diagrammatical view 300 is shown of an exemplary embodiment of the process for recovering industrial tanks 100, according to the present invention.

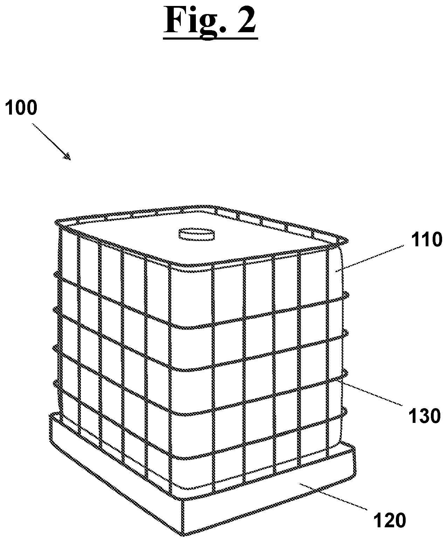

With reference to Fig. 2, a tank 100 comprises a plastic composite IBC 110 arranged, in use, to contain liquid 10, a pallet 120 and a cage 130. In particular, the IBC 110 has a parallelepiped shape and comprises a bottom face 110a, a top face 110b and four side walls 110c.

According to the process diagrammatically shown in Fig. 1, firstly is arranged an IBC 110 to recover [301] from which are removed the pallet 120 and the cage 130 [302] . Then begins the cutting phase of the IBC 110 from which are obtained six planar portions 115.

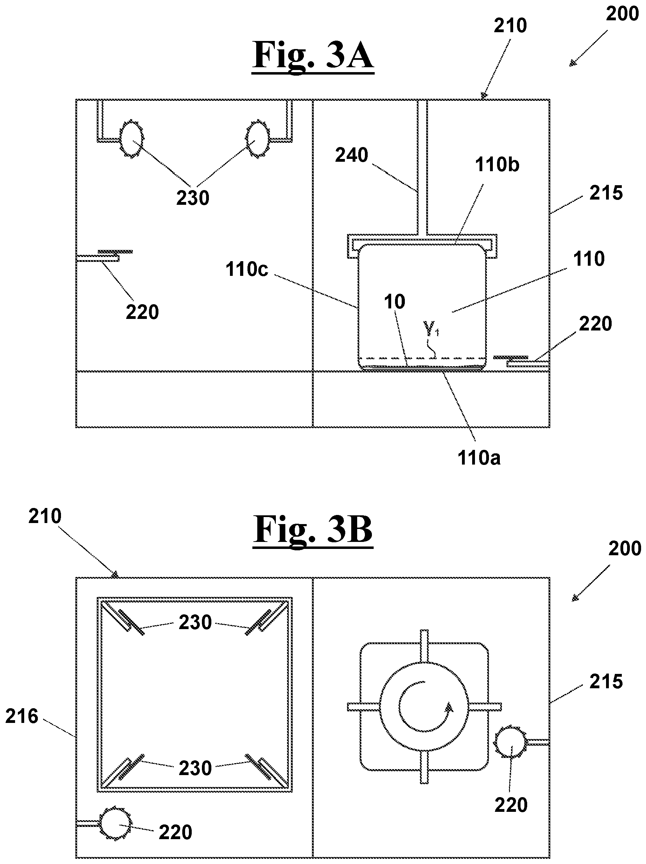

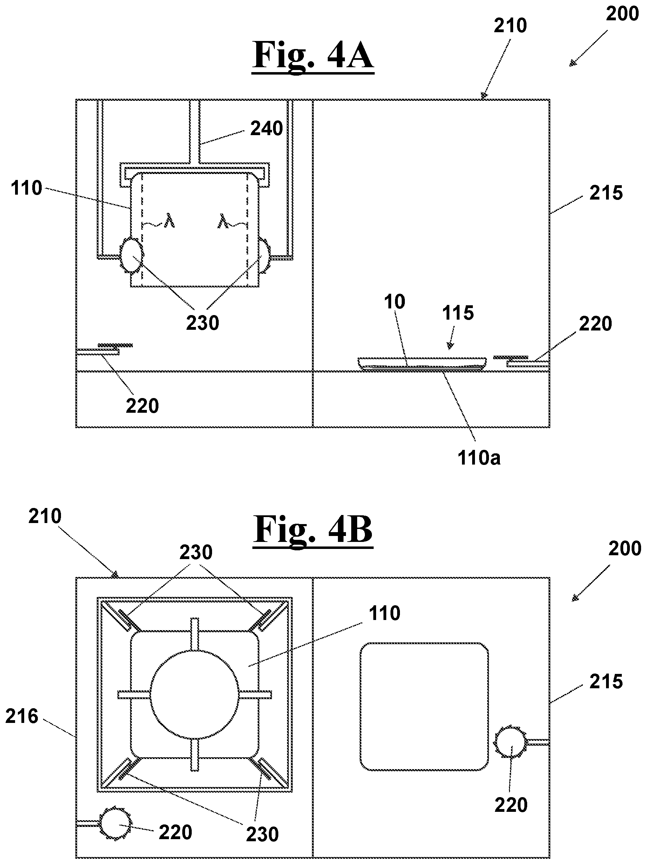

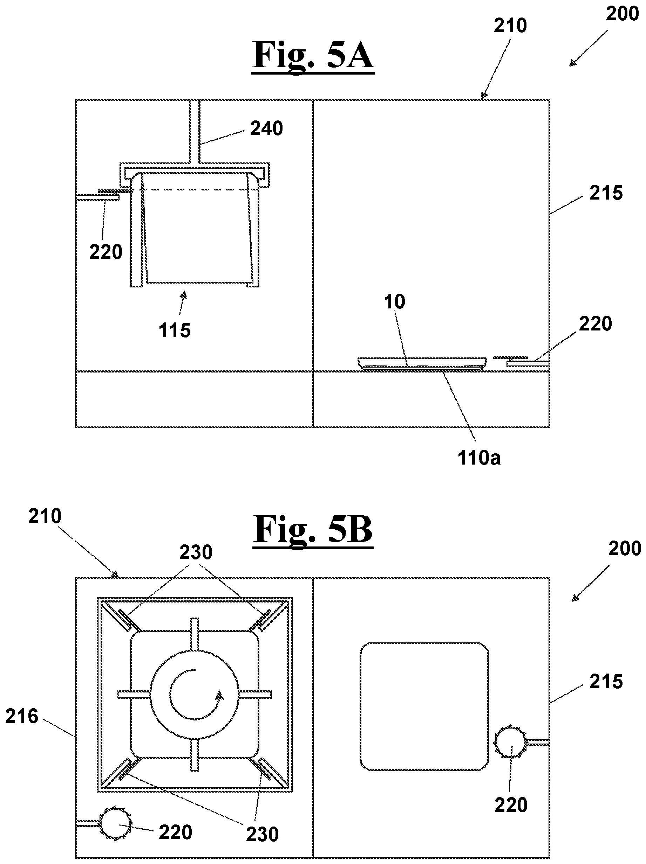

In particular, with reference even at Figs. 3A, 3B, 4A, 4B, 5A, 5B, 6A, 6B, this cutting step is carried out by a cutting machine 200 and it is structured in more steps.

The IBC 110 is at first located in the insulating cabin 210, in particular in the area of inlet 215 [303], and it is then fastened by the gripper 240 [304].

The gripper 240 puts then in rotation the IBC 110 whereas a first horizontal electric saw 220 cuts the IBC 110 itself along a horizontal curve γ₁ joining the bottom face 110a with the side walls 110c [305].

The gripper 240 then lifts the IBC 110 leaving on the ground the bottom face 110a, which normally contains most of the liquid residuals 10. The gripper then moves the IBC 110 until it is in the area of outlet 216, where it is carried out the vertical cutting step wherein four vertical electric saws 230 cut the IBC 110 along four vertical curves λ, corresponding roughly to the edges between the side walls 110c [306].

Again the gripper 240 puts in rotation the IBC 110 whereas a second horizontal electric saw 220 cuts the IBC 110 itself along a horizontal curve γ₂ joining the top face 110b with the side walls 110c [307].

At the end of the cutting step, 6 planar portions 115 are obtained, corresponding roughly to the bottom face 110a, to the top face 110b and to 4 side walls 110c.

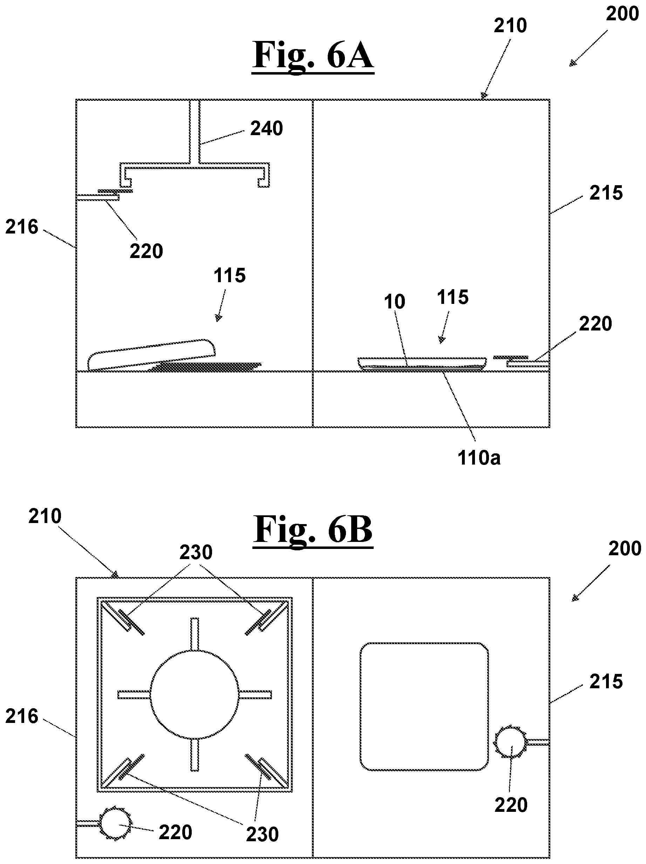

As shown in Figs. 6A and 6B, the side walls 110c and the top face 110b fall on the ground of the area of outlet 216, whereas the bottom face 110A remains on the ground of the area of inlet 215. This way, the side walls 110c and the top face 110b, normally cleaner, can be sent directly to the step of grinding, whereas the bottom face 110A can be clean separately by an easy water jet or other cleaning liquid [308]. The cleaning step is therefore much quicker and efficient with respect to a recovery process that uses a manual cutting by an operator, ensuring a final product of higher quality and a use of a very small amount of both water and polluting cleaning products.

The planar portions 115 thus obtained are finally sent to a mill for the grinding and the reduction in slivers of clean plastic, which can be then being used as secondary raw material for being then recycled [309].

## Claims

1. A process for recovering industrial tanks (100) comprising the steps of:
- prearranging a tank (100) to recover, said tank (100) comprising:
- an plastic composite intermediate bulk container, or "plastic composite IBC", (110) arranged, in use, to contain liquid (10), said plastic composite IBC (110) having parallelepiped shape and comprising a bottom face (110a), a top face (110b) and four side walls (110c);
- a pallet (120) arranged to support said plastic composite IBC (110);
- a cage (130) arranged to wrap said plastic composite IBC (110);
- removing said cage (130) and said pallet (120);
- cutting said plastic composite IBC (110) obtaining planar portions (115);
- cleaning said planar portions (115) from possible residuals of said liquid (10);
- grinding said planar portions (115) obtaining a plurality of residual scales of plastic composite;
said cutting step of said plastic composite IBC (110) being carried out by a cutting machine (200), said cutting machine (200) comprising at least one electric saw (220) arranged to cut said plastic composite IBC (110),
said process **characterized in that** said cutting step comprises the steps of:
- arranging said plastic composite IBC (110) in said cutting machine (200);
- horizontal cutting along a curve γ₁ joining said bottom face (110a) with said side walls (110c);
- vertical cutting along curves λ joining said side walls (110c);
- horizontal cutting along a curve γ₂ joining said top face (110b) with said side walls (110c).

2. The process for recovering industrial tanks (100), according to claim 1, wherein said cutting step also comprises the steps of:
- locking said plastic composite IBC (110) by a gripper (240);
- rotating said plastic composite IBC (110) by said gripper (240), said rotation arranged to assist said steps of horizontal cutting along said curves γ₁ and γ₂.

3. A cutting machine (200) for cutting a plastic composite IBC (110), said plastic composite IBC (110) having parallelepiped shape and comprising a bottom face (110a), a top face (110b) and four side walls (110c), said cutting machine (200) comprising:
- an insulating cabin (210) comprising at least one access door;
- at least one electric saw (220,230) internal to said insulating cabin (210) and arranged to cut said plastic composite IBC (110);
- a gripper (240) arranged to fasten and move said plastic composite IBC (110) in said insulating cabin (210) in order to assist the cutting of said plastic composite IBC (110);
said cutting machine (200) **characterized in that** it comprises furthermore:
- at least one horizontal electric saw (220) arranged to cut said plastic composite IBC (110) along horizontal curves γ₁, γ₂;
- at least one vertical electric saw (230) arranged to cut said plastic composite IBC (110) along vertical curves λ.

4. The cutting machine (200), according to claim 3, wherein said gripper (240) is adapted to rotate said plastic composite IBC (110) to allow said or each horizontal electric saw (220) to cut said plastic composite IBC (110) along horizontal curves γ₁, γ₂.

5. The cutting machine (200), according to claim 3, wherein said insulating cabin (210) comprises:
- an area of inlet (215) having a first access door, said area of inlet (215) comprising a first horizontal electric saw (220) arranged to cut said plastic composite IBC (110) along a horizontal curve γ₁ joining said bottom face (110a) with said side walls (110c);
- an area of outlet (216) having a second access door, said area of outlet (216) comprising:
- four vertical electric saws (230) arranged to cut said plastic composite IBC (110) along four vertical curves λ;
- a second horizontal electric saw (220) arranged to cut said plastic composite IBC (110) along a horizontal curve γ₂ joining said top face (110b) with said side walls (110c).

6. The cutting machine (200), according to claim 5, wherein said gripper (240) is adapted to move said plastic composite IBC (110) between said area of inlet (215) and said area of outlet (216).

7. The cutting machine (200), according to claim 3, wherein out of said insulating cabin (210) a control board is located for the control of the cutting machine (200) by a user.

8. The cutting machine (200), according to claim 5, wherein said access doors are adapted to be closed while the cutting machine (200) is at work.

## Patentansprüche

1. Ein Verfahren zur Rückgewinnung von Industrietanks (100), mit den Schritten:
- Voranordnen eines Tanks (100) zum Rückgewinnen, wobei der Tank (100) aufweist:
- ein Kunststoffverbund-Großpackmittel oder einen "Kunststoffverbund-IBC" (110), das/der eingeordnet ist, um im Einsatz eine Flüssigkeit (10) zu enthalten, wobei der Kunststoffverbund-IBC (110) eine Parallelepiped-Form besitzt und eine Bodenfläche (110a), eine obere Fläche (110b) und vier Seitenwände (110c) aufweist,
- eine Palette (120), die angeordnet ist, um den Kunststoffverbund-IBC (110) zutragen,
- einen Käfig (130) der angeordnet ist, um den Kunststoffverbund-IBC (110) zu umgeben,
- Entfernen des Käfigs (130) und der Palette (120),
- Schneiden des Kunststoffverbund-IBC (110), um planare Abschnitte (115) zu erhalten,
- Reinigen der planaren Abschnitte (115) von möglichen Resten der Flüssigkeit (10),
- Zerkleinern der planaren Abschnitte (115), um eine Vielzahl von Restschuppen des Kunststoffverbunds zu erhalten, wobei der Schneidschritt des Kunststoffverbund-IBC (110) durch eine Schneidmaschine (200) ausgeführt wird, wobei die Schneidmaschine (200) zumindest eine elektrische Säge (220) aufweist, die angeordnet ist, um das Kunststoffverbund-IBC (110) zu schneiden,
wobei das Verfahren **dadurch gekennzeichnet ist, dass** der Schneidschritt die folgenden Schritte aufweist:
- Anordnen des Kunststoffverbund-IBC (110) in der Schneidmaschine (200),
- Horizontales Schneiden entlang einer Kurve γ₁, die die Bodenfläche (110a) mit den Seitenwänden (110c) verbindet,
- vertikales Schneiden entlang von Kurven λ, die die Seitenwände (110c) verbinden,
- horizontales Schneiden entlang einer Kurve γ₂, die die obere Fläche (110b) mit den Seitenwänden (110c) verbindet.

2. Das Verfahren zur Zurückgewinnung von Industrietanks (100) gemäß Anspruch 1, wobei der Schneidschritt außerdem die Schritte aufweist:
- Festlegen des Kunststoffverbund-IBC (110) durch einen Greifer (240),
- Rotieren des Kunststoffverbund-IBC (110) durch den Greifer (240), wobei die Rotation angeordnet ist, um die Schritte des horizontalen Schneidens entlang den Kurven γ₁ und γ₂ zu unterstützen.

3. Eine Schneidmaschine (200) zum Schneiden eines Kunststoffverbund-IBC (110), wobei das Kunststoffverbund-IBC (110) eine Parallelepiped-Form besitzt und eine Bodenfläche (110a), eine obere Fläche (110b) und vier Seitenwände (110c) aufweist, wobei die Schneidmaschine (200) umfasst:
- eine Isolationskabine (210) mit zumindest einer Zugangstür,
- zumindest einer elektrischen Säge (220,230) innerhalb der Isolationskabine (210), die angeordnet ist, um den Kunststoffverbund-IBC (110) zu schneiden,
- einen Greifer (240), der angeordnet ist, um den Kunststoffverbund-IBC (110) in der Isolationskabine (210) zu befestigen und zu bewegen, um das Schneiden des Kunststoffverbund-IBC (110) zu unterstützen,
wobei die Schneidmaschine (200) **dadurch gekennzeichnet ist, dass** sie ferner aufweist:
- zumindest eine horizontale elektrische Säge (220), die angeordnet ist, um den Kunststoffverbund-IBC (110) entlang horizontaler Kurven γ₁, γ₂, zu schneiden,
- zumindest eine vertikale elektrische Säge (230) die angeordnet ist, um den Kunststoffverbund-IBC (110) entlang vertikaler Kurven λ zu schneiden.

4. Die Schneidmaschine (200) gemäß Anspruch 3, wobei der Greifer (240) eingerichtet ist, um den Kunststoffverbund-IBC (110) zu rotieren, um die oder jede horizontale elektrische Säge (220) das Kunststoffverbund-IBC (110) entlang horizontaler Kurven γ₁, γ₂ schneiden zu lassen.

5. Die Schneidmaschine (200) gemäß Anspruch 3, wobei die Isolationskabine (210) aufweist:
- einen Bereich eines Einlasses (215) mit einer ersten Zugangstür, wobei der Bereich des Einlasses (215) eine erste horizontale elektrische Säge (220) aufweist, die angeordnet ist, um den Kunststoffverbund-IBC (110) entlang einer horizontalen Kurve γ₁, welche die Bodenfläche (110a) mit den Seitenwänden (110c) verbindet, zu schneiden,
- einen Bereich eines Auslasses (216) mit einer zweiten Zugangstür, wobei der Bereich des Auslasses (216) aufweist:
- vier vertikale elektrische Sägen (230), die angeordnet sind, um den Kunststoffverbund-IBC (110) entlang vier vertikaler Kurven λ zu schneiden,
- eine zweite horizontale elektrische Säge (220), die angeordnet, um den Kunststoffverbund-IBC (110) entlang einer horizontalen Kurve γ₂, die die obere Fläche (110b) mit den Seitenwänden (110c) verbindet, zu schneiden.

6. Die Schneidmaschine (200) gemäß Anspruch 5, wobei der Greifer (240) eingerichtet ist, um den Kunststoffverbund-IBC (110) zwischen dem Bereich des Einlasses (215) und dem Bereich des Auslasses (216) zu bewegen.

7. Die Schneidmaschine (200) gemäß Anspruch 3, wobei sich außerhalb der Isolationskabine (210) eine Steuertafel für die Steuerung der Schneidmaschine (200) durch einen Anwender befindet.

8. Die Schneidmaschine (200) gemäß Anspruch 5, wobei die Zugangstüren eingerichtet sind, um geschlossen zu werden, während die Schneidmaschine (200) arbeitet.

## Revendications

1. Procédé de recyclage de cuves industrielles (100) comprenant les étapes de :
- pré-agencement d'une cuve (100) à recycler, ladite cuve (100) comprenant :
- un grand récipient pour vrac en plastique composite,
ou « GRV en plastique composite », (110) agencé pour, en utilisation, contenir un liquide (10), ledit GRV en plastique composite (110) ayant une forme parallélépipède et comprenant une face inférieure (110a), une face supérieure (110b) et quatre parois latérales (110c) ;
- une palette (120) agencée pour supporter ledit GRV en plastique composite (110) ;
- une cage (130) agencée pour envelopper ledit GRV en plastique composite (110) ;
- retrait de ladite cage (130) et de ladite palette (120) ;
- découpe dudit GRV en plastique composite (110) en obtenant des parties planes (115) ;
- nettoyage desdites parties planes (115) d'éventuels résidus dudit liquide (10) ;
- meulage desdites parties planes (115) en obtenant une pluralité d'écaillés résiduelles de plastique composite ;
ladite étape de découpe dudit GRV en plastique composite (110) étant réalisée par une machine de découpe (200), ladite machine de découpe (200) comprenant au moins une scie électrique (220) agencée pour découper ledit GRV en plastique composite (110),
ledit procédé **caractérisé en ce que** ladite étape de découpe comprend les étapes de :
- agencement dudit GRV en plastique composite (110) dans ladite machine de découpe (200) ;
- découpe horizontale le long d'une courbe γ₁ reliant ladite face inférieure (110a) auxdites parois latérales (110c) ;
- découpe verticale le long de courbes λ reliant lesdites parois latérales (110c) ;
- découpe horizontale le long d'une courbe γ₂ reliant ladite face supérieure (110b) auxdites parois latérales (110c).

2. Procédé de recyclage de cuves industrielles (100), selon la revendication 1, dans lequel ladite étape de découpe comprend également les étapes de :
- blocage dudit GRV en plastique composite (110) par un élément de préhension (240) ;
- rotation dudit GRV en plastique composite (110) par ledit élément de préhension (240), ladite rotation agencée pour faciliter lesdites étapes de découpe horizontale le long desdites courbes γ₁ et γ₂.

3. Machine de découpe (200) destinée à découper un GRV en plastique composite (110), ledit GRV en plastique composite (110) ayant une forme parallélépipède et comprenant une face inférieure (110a), une face supérieure (110b) et quatre parois latérales (110c), ladite machine de découpe (200) comprenant :
- une cabine d'isolement (210) comprenant au moins une porte d'accès ;
- au moins une scie électrique (220, 230) interne à ladite cabine d'isolement (210) et agencée pour découper ledit GRV en plastique composite (110) ;
- un élément de préhension (240) agencé pour fixer et déplacer ledit GRV en plastique composite (110) dans ladite cabine d'isolement (210) afin de faciliter la découpe dudit GRV en plastique composite (110) ;
ladite machine de découpe (200) **caractérisée en ce qu'**elle comprend en outre :
- au moins une scie électrique horizontale (220) agencée pour découper ledit GRV en plastique composite (110) le long de courbes horizontales γ₁, γ₂ ;
- au moins une scie électrique verticale (230) agencée pour découper ledit GRV en plastique composite (110) le long de courbes verticales λ.

4. Machine de découpe (200), selon la revendication 3, dans laquelle ledit élément de préhension (240) est adapté pour pivoter ledit GRV en plastique composite (110) pour permettre à ladite ou à chaque scie électrique horizontale (220) de découper ledit GRV en plastique composite (110) le long de courbes horizontales γ₁, γ₂.

5. Machine de découpe (200), selon la revendication 3, dans laquelle ladite cabine d'isolement (210) comprend :
- une zone d'admission (215) ayant une première porte d'accès, ladite zone d'admission (215) comprenant une première scie électrique horizontale (220) agencée pour découper ledit GRV en plastique composite (110) le long d'une courbe horizontale γ₁ reliant ladite face inférieure (110a) auxdites parois latérales (110c) ;
- une zone d'évacuation (216) ayant une deuxième porte d'accès, ladite zone d'évacuation (216) comprenant :
- quatre scies électriques verticales (230) agencées pour découper ledit GRV en plastique composite (110) le long de quatre courbes verticales λ ;
- une deuxième scie électrique horizontale (220) agencée pour découper ledit GRV en plastique composite (110) le long d'une courbe horizontale γ₂ reliant ladite face supérieure (110b) auxdites parois latérales (110c).

6. Machine de découpe (200), selon la revendication 5, dans laquelle ledit élément de préhension (240) est adapté pour déplacer ledit GRV en plastique composite (110) entre ladite zone d'admission (215) et ladite zone d'évacuation (216).

7. Machine de découpe (200), selon la revendication 3, dans laquelle à l'extérieur de ladite cabine d'isolement (210) se trouve un tableau de commande permettant à un utilisateur de commander la machine de découpe (200).

8. Machine de découpe (200), selon la revendication 5, dans laquelle lesdites portes d'accès sont adaptées pour être fermées tandis que la machine de découpe (200) fonctionne.
